(19) Europäisches Patentamt
European Patent Office
Office européen des brevets

(11) Publication number: 0 197 540 B1

(12) # EUROPEAN PATENT SPECIFICATION

(45) Date of publication of patent specification: 13.11.91

(51) Int. Cl.5: C08L 83/08, C08L 83/04, C08K 5/17, C08K 5/54

(21) Application number: 86104760.3

(22) Date of filing: 08.04.86

The file contains technical information submitted after the application was filed and not included in this specification

(54) **Use of amines for stabilizing polysiloxane fluids.**

(30) Priority: 10.04.85 US 721822
10.04.85 US 721823
10.04.85 US 721746

(43) Date of publication of application:
15.10.86 Bulletin 86/42

(45) Publication of the grant of the patent:
13.11.91 Bulletin 91/46

(84) Designated Contracting States:
AT BE CH DE FR GB IT LI LU NL SE

(56) References cited:
BE-A- 665 725
FR-A- 927 399
GB-A- 1 174 594
US-A- 4 230 632
US-A- 4 251 277

(73) Proprietor: WACKER-CHEMIE GMBH
Prinzregentenstrasse 22
W-8000 München 22(DE)

(72) Inventor: Manis, Paul A.
806 North Sherman Street
Allentown Pennsylvania 18103(US)
Inventor: Martin, Eugene Ray
8023 Springville Highway
Onsted Michigan 49265(US)
Inventor: Muntz, Ronald L.
1360 Trenton Road
Adrian Michigan 49221(US)

EP 0 197 540 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to rendering polysiloxane fluids resistant to depolymerization under the influence of substances which promote such depolymerization, in particular to clay induced degradation.

### Background of the Invention

Thiofunctional polysiloxane fluids as well as organopolysiloxane fluids may be prepared by reacting silanes or siloxanes in the presence of acid clays to form thiofunctional polysiloxane fluids and organopolysiloxane fluids. It is known that these siloxane fluids will degrade, especially at elevated temperatures, in the presence of acid clays to form volatile, lower molecular weight siloxanes and odor forming products. This often results in the loss of desirable functional groups and produces lower molecular weight siloxanes.

When polysiloxane fluids, such as blends of thiofunctional polysiloxane fluids and organopolysiloxane fluids are used in an electrostatic copying apparatus to effect release between the toner treated paper which is impregnated with kaolin clay and a heated fuser roll, the siloxane fluids have a tendency to degrade and form low molecular weight siloxanes and odor producing products. It is believed that this is due to the kaolin clay which is present in the paper residue that collects in the sump along with the excess release agent. When the sump contents are reused, the combination of acidic kaolin clay and the high temperature of the fuser roll causes the siloxane fluids to degrade to form volatile, low molecular weight siloxanes having reduced functional groups. Condensation of the low molecular weight volatile siloxanes on electrical switches can inhibit the switches function due to the good dielectric properties of the siloxanes.

Therefore, it is an object of this invention to provide stabilized polysiloxane fluids containing a thiofunctional polysiloxane fluid and/or an organopolysiloxane fluid. Said polysiloxane fluids desirably are stable, against degradation e.g. in the presence of heat and kaolin clay without significantly affecting the properties of the siloxane fluids.

### Summary of the Invention

The foregoing objects and others which will become apparent from the following description are accomplished in accordance with this invention, generally speaking, by the use of an aminofunctional compound for stabilizing a polysiloxane fluid containing a thiofunctional polysiloxane fluids and/or an organopolysiloxane fluid against depolymerisation under the influence of substances which promote such depolymerisation, e.g. of kaolin clay, wherein the aminofunctional compound is used in an amount of at least 0.001 percent by weight based on the weight of the aminofunctional compound and the polysiloxane fluid, preferably at a temperature of from 20°C to 200°C.

### Detailed Description of the Invention

The thiofunctional polysiloxane fluids which are preferably employed in this invention are represented by the formula

$$(R'SR'')_b\text{---}\overset{R_a}{\overset{|}{Si}}O_{\frac{3-(a+b)}{2}}\quad Z_c\ ,$$

where R is a monovalent hydrocarbon radical or a halogenated monovalent hydrocarbon radical having from 1 to 18 carbon atoms, R' is hydrogen or a monovalent hydrocarbon radical having from 1 to 18 carbon atoms, R" is a divalent hydrocarbon radical free of aliphatic unsaturation having from 2 to 18 carbon atoms, hydrocarbon ether radicals or hydrocarbon thioether radicals, in which R" is bonded to the silicon atom via a silicon carbon bond, Z is a radical selected from an $R'O_{0.5}$ or $R_3SiO_{0.5}$ radical, a is a number of from 0 to 2, b is a number of from 1 to 3 and the sum of a + b is equal to at least 2, and c is a number of from 0 to 3.

The thiofunctional polysiloxane fluids may also be copolymers containing from 1 to 99 mole percent of siloxane units of the formula

$$R_eSiO_{\frac{4-e}{2}}$$

and from 99 to 1 mole percent of siloxane units having at least one thiol unit of the formula

$$(R'SR''-)_b\overset{\overset{R_a}{|}}{Si}O_{\frac{4-(a+b)}{2}}$$

in which R, R', R'', a and b are the same as above and e is a number of from 0 to 2. These copolymers may also contain $R'O_{0.5}$ and $R_3SiO_{0.5}$ units in which R and R' are the same as above.

Suitable examples of monovalent hydrocarbon radicals represented by R are alkyl radicals, such as the methyl, ethyl, propyl, butyl, octyl, dodecyl and octadecyl radicals; aryl radicals, such as the phenyl and naphthyl radicals; alkenyl radicals, such as the vinyl and allyl radicals; cycloalkyl radicals, such as the cyclobutyl, cyclopentyl and cyclohexyl radicals; alkaryl radicals, such as the tolyl, xylyl and ethylphenyl radicals and aralkyl radicals, such as the benzyl, $\alpha$-phenylethyl, $\beta$-phenylethyl and $\alpha$-phenylbutyl radicals.

Examples of halogenated monovalent hydrocarbon radicals represented by R are the haloalkyl radicals such as the 3,3,3-trifluoropropyl radical and halaryl radicals such as the o-, m-and p- chlorophenyl radicals.

Examples of monovalent hydrocarbon radicals represented by R' are alkyl radicals, such as the methyl, ethyl, propyl, butyl, octyl, dodecyl and octadecyl radicals; aryl radicals, such as the phenyl and naphthyl radicals, alkenyl radicals such as the vinyl and allyl radicals; cycloalkyl radicals, such as the cyclobutyl, cyclopentyl and cyclohexyl radicals; alkaryl radicals, such as the tolyl, xylyl and ethylphenyl radicals and aralkyl radicals, such as the benzyl, $\alpha$-phenylethyl, $\beta$-phenylethyl and $\alpha$-phenylbutyl radicals.

Examples of suitable divalent hydrocarbon radicals represented by R'' are ethylene, trimethylene, tetramethylene, hexamethylene and octamethylene.

Examples of suitable divalent hydrocarbon ether radicals represented by R'' are those having the formulas $R'''(-OC_2H_4-)_r$, $R'''(-OC_2H_4OCH_2)_r$, $R'''(-OC_3H_6-)_r$ and $R'''(-OC_4H_8-)_r$, as well as the corresponding thio radicals where sulfur is substituted for the oxygen in the hydrocarbon ether radicals, where R''' is a divalent hydrocarbon radical having from 1 to 4 carbon atoms and r is a number of from 1 to 20.

Suitable examples of divalent hydrocarbon radicals represented by R''' having from 1 to 4 carbon atoms are methylene, ethylene, propylene and butylene radicals.

The thiofunctional polysiloxane fluids may be prepared in accordance with U. S. Patent No. 4,046,795 to Martin, in which a disiloxane and/or a hydroxy or hydrocarbonoxy containing silane or siloxane is equilibrated with a cyclic trisiloxane in the presence of an acid catalyst and at least one of the above organosilicon compounds contain a thiol group.

Catalysts which may be employed in effecting the reaction between a disiloxane and/or a hydroxy and/or hydrocarbonoxy containing silane or siloxane and a cyclic trisiloxane in which at least one of the reactants contains a thiol group are acid clays and organic and inorganic acids having a pK value less than 1.0 and more preferably below 0.7 in an aqueous solution. Suitable acid catalysts which may be employed are benzenesulfonic acid, para-toluene-sulfonic acid, sulfuric acid, sulfurous acid, nitric acid, perchloric acid, hydrochloric acid and acid clays such as Filtrol No. 13 and No. 24 (available from Filtrol Corporation).

The amount of catalyst is not critical, although it is preferred that from 0.003 percent up to about 10 percent by weight of catalyst be used based on the total weight of the reactants, i.e., the silicon containing compounds used in the preparation of the thiofunctional polysiloxane fluids. Greater amounts of catalyst may be used; however, the amount of catalyst should not be so great that it will alter the functionality of the resultant composition.

The catalysts may be removed or destroyed after the reaction is complete by washing with water or they may be destroyed by neutralizing with basic reagents. In addition, certain catalysts, such as acid clays, may be removed by filtration.

The reaction may be conducted at any temperature ranging from e.g. 25°C up to 200°C over a period of time ranging from 0.5 hours up to several days and, if desired, in the presence of a hydrocarbon solvent. Under certain conditions, for example when an anhydrous acid catalyst is employed, a catalytic amount of a protic compound is required to effect the reaction. The term protic compound refers to compounds having a reactive hydrogen such as alcohols, e.g., methanol, ethanol, propanol, butanol and water. The amount of

protic compound is based on the total weight of the silicon containing reactants.

The reaction may be conducted at atmospheric, sub-atmospheric or superatmospheric pressure in the presence or absence of a solvent. When a solvent is employed, it may be employed in an amount of from 1 to 50 percent by weight based on the weight of silicon containing reactants. Examples of suitable hydrocarbon solvents are heptane, benzene, toluene and xylene. It is, however, preferred that the reaction be conducted in an inert atmosphere.

Hydroxy and hydrocarbonoxy containing silanes which may be employed are silanes such as 3-mercaptopropyltrimethoxysilane, 2-mercaptoethyltriethoxysilane, ω-mercaptodecyltriethoxysilane, 2-mercaptohexyltripropoxysilane, ω-mercaptoamyltriethoxysilane, 2-(triethoxysilyl)ethyl butyl thioether, 3-(triethoxysilyl)propyl butyl thioether, 4-(triethoxysilyl)butyl methyl thioether, 2-(methyldiethoxysilyl)ethyl methyl thioether, 2-(methyldiethoxysilyl)ethyl phenyl thioether, 2-(methyldiethoxysilyl)ethyl dodecyl thioether, 6-(trimethoxysilyl)hexyl ethyl thioether, methyltriethoxysilane, dimethyldiethoxysilane, trimethylethoxysilane, dimethylsilane diol and diphenylsilane diol.

The corresponding siloxanes or copolymers thereof which contain at least one or more alkoxy or hydroxy groups may also be employed. Suitable examples of these polysiloxanes are monoethoxy-endblocked beta-mercaptoethylpropylpolysiloxane, methyldiethoxysilyl-endblocked beta-mercaptobutylmethylpolysiloxane, monohydroxy-endblocked beta-mercaptoethylmethylpolysiloxane, dihydroxy-endblocked dimethylpolysiloxane and diethoxy-endblocked dimethylpolysiloxane.

Examples of suitable disiloxanes are hexamethyldisiloxane, hexaethyldisiloxane, hexapropyldisiloxane, hexaoctyldisiloxane and bis-(3-mercaptopropyl)tetramethyldisiloxane.

Examples of suitable cyclic siloxanes are hexamethylcyclotrisiloxane, hexaethylcyclotrisiloxane, hexaphenylcyclotrisiloxane, hexabutylcyclotrisiloxane, hexaoctylcyclotrisiloxane and 1,2,3-trimethyl-1,2,3-triphenylcyclotrisiloxane.

The thiofunctional polysiloxane fluids employed in the process of this invention may, for example, be prepared in accordance with the process described in U.S. Patent No. 4,046,795 to Martin.

Thiofunctional polysiloxane fluids may also be prepared by reacting hydroxyl containing polysiloxanes with silanes containing thiol groups or by the cohydrolysis of chloroalkylchlorosilanes, dialkyldichlorosilanes and trimethylchlorosilanes and thereafter reacting the chloroalkyl groups with sulfur containing compounds such as sodium sulfohydride in the presence of dimethylformamide. These thiofunctional polysiloxane fluids and their methods of preparation are described in U.S. Patent Nos. 3,346,405 to Viventi; 2,960,492 to Morton and 3,388,144 to Musolf et al.

The organopolysiloxane fluids employed in this invention may be represented by the general formula

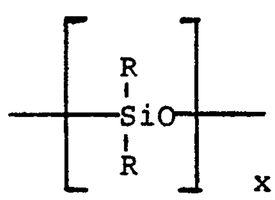

wherein the R(s), which may be the same or different, represent monovalent hydrocarbon radicals or halogenated monovalent hydrocarbon radicals having from 1 to 18 carbon atoms and x is a number greater than 8.

The radicals represented by R in the above formula are the same as those described heretofore for the R radicals.

Any linear, branched or cyclic organopolysiloxanes having an average of from 1.75 to 2.25 organic radicals per silicon atom may be employed. The organopolysiloxanes may be triorganosiloxy, alkoxy or hydroxy terminated; however, they should be free of aliphatic unsaturation. It is preferred that the polysiloxane have a viscosity of between 5 and 1,000,000 mPa.s and more preferably between 50 and 300,000 mPa.s at 25°C. Also, it is possible to combine high and low viscosity fluids to form a fluid having the desired viscosity. High molecular weight gums may also be employed, however, it is preferred that these gums be dissolved in an organic solvent before they are combined with the thiofunctional polysiloxanes.

Examples of suitable organopolysiloxanes are trialkylsiloxy-endblocked diorganopolysiloxanes such as trimethylsiloxy-endblocked dimethylpolysiloxanes, hydroxy terminated diorganopolysiloxanes such as dimethylpolysiloxanes, diethylpolysiloxanes, dipropylpolysiloxanes and alkoxy terminated diorganopolysiloxanes such as methoxy terminated dimethylpolysiloxanes, ethoxy terminated dimethylpolysiloxanes, propoxy

terminated organopolysiloxanes containing dimethyl or diethyl or dipropyl siloxane groups.

The polysiloxane fluids may contain from 0 to 100 percent by weight of a thiofunctional polysiloxane fluid and from 100 to 0 percent by weight of an organopolysiloxane fluid based on the combined weights of the thiofunctional polysiloxane and the organopolysiloxane fluids. It is preferred that the blend contain from 1.0 to 30 percent by weight of the thiofunctional polysiloxane fluid and from 70 percent to 99 percent by weight of organopolysiloxane fluid based on the weight of the thiofunctional polysiloxane fluid and the organopolysiloxane fluid.

Although it is not essential, the polysiloxane fluid may be diluted with an organic solvent to form a solution containing from 0.1 to 99 percent and more preferably from 1.0 to 20 percent by weight of polysiloxane fluid, based on the weight of the composition, i.e., the solvent and the polysiloxane fluid. Suitable examples of organic solvents are aliphatic hydrocarbons such as hexane, heptane and octane; aromatic hydrocarbons such as benzene, toluene, xylene, ethylbenzene and naphtha; halogenated hydrocarbons such as methylene chloride, perchloroethylene, trichloroethylene and carbon tetrachloride; ethers and polyethers such as diethyl ether, dimethyl ether, dibutyl ether, diethylene glycol dimethyl ether and diethylene glycol diethyl ether. Preferably, the solvent is methylene chloride or perchloroethylene.

Aminofunctional compounds which may be employed as stabilizing agents are organofunctional amines having the general formula

$$R^1-\overset{\displaystyle R^1}{\overset{|}{N}}-\left(R^2-\overset{\displaystyle R^1}{\overset{|}{N}}\right)_m-R^1 \quad ,$$

aminofunctional silanes of the idealized formula

$$\left[R^1-\overset{\displaystyle R^1}{\overset{|}{N}}-R^2-\left(\overset{\displaystyle R^1}{\overset{|}{N}}-R^2\right)_m\right]_y SiR_{4-y}$$

and aminofunctional siloxanes of the idealized formula

$$\left[R^1-\overset{\displaystyle R^1}{\overset{|}{N}}-R^2-\left(\overset{\displaystyle R^1}{\overset{|}{N}}-R^2\right)_m\right]_y \overset{\displaystyle R_a}{\overset{|}{Si}}O_{\frac{4-a-y}{2}}$$

where R is the same as above, $R^1$ which may be the same or different represents hydrogen or monovalent hydrocarbon radicals having from 1 to 30 carbon atoms which may be substituted with hydroxyl groups, $R^2$ which is the same or different, is a divalent hydrocarbon radical having from 1 to 20 carbon atoms, a is a number of from 0 to 2, m is an integer of from 0 to 20 and y is a number of from 1 to 4. It is preferred that at least one $R^1$ in the formulas mentioned above is a monovalent hydrocarbon radical having from one to 30 carbon atoms substituted with a hydroxyl group.

Examples of monovalent hydrocarbon radicals represented by $R^1$ are alkyl radicals such as the methyl, ethyl, propyl, butyl, hexyl, octyl, decyl, dodecyl, hexadecyl, octadecyl, eicosyl, docosyl, hexacosyl, octacosyl and triacontyl radicals; alkenyl radicals such as ethenyl, 1-propenyl, 1-isobutenyl, and the various isomers of heptenyl, octenyl, nonenyl, dodecenyl, heptadecenyl, nonadecenyl and eicosenyl; aryl radicals such as the phenyl, α-naphthyl, β-naphthyl and the α-anthryl radicals, alkaryl radicals such as the o-tolyl, m-tolyl, 2,3-xylyl, 2,4-xylyl, o-cumenyl, m-cumenyl, o-ethylphenyl, m-ethylphenyl, p-ethylphenyl, 2-methyl-α-naphthyl, 1-ethyl-β-naphthyl, 2,3-dipropyl-α-naphthyl radicals and aralkyl radicals such as the benzyl, α-phenylethyl, β-phenylethyl, 2-phenylbutyl, α'-naphthylmethyl, α-(α'-naphthyl) ethyl and the corresponding α'- and β'-naphthyl derivatives of n-amyl up to and including the octadecyl radical.

Examples of divalent hydrocarbon radicals represented by $R^2$ are alkylene radicals such as ethylene, trimethylene, tetramethylene, hexamethylene, octamethylene, tetradecamethylene, octadecamethylene and arylene radicals such as phenylene, diphenylene and naphthylene radicals.

Examples of suitable organofunctional amines which may be employed are aliphatic and aromatic, primary, secondary and tertiary amines such as isopropylamine, n-propylamine, n-butylamine, sec-butylamine, tert-butylamine, N-methyl-N-ethylamine, N-methyl-N-ethylisopropylamine, 2-amino-3-methylbutane, N,N-dimethylethylamine, allylamine, n-amylamine, isoamylamine, n-hexylamine, n-octylamine, n-decylamine, N,N-diethylpropylamine, ethanolamine, diethanolamine, triethanolamine, ethylenediamine, diethylenetriamine, triethylenetetramine, aniline, methylaniline, dimethylaniline, ethylaniline, o-, m- or p-toluidine, 2,3-dimethylaniline, 3,5-dimethylaniline, 2,4-dimethylaniline, diphenylamine, and triphenylamine, p-phenylenediamine, 4,4' diaminodiphenylmethane.

Other amines which may be employed are those having the formulas

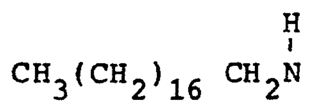, $CH_3(CH_2)_{16}\ CH_2N(CH_3)_2$,

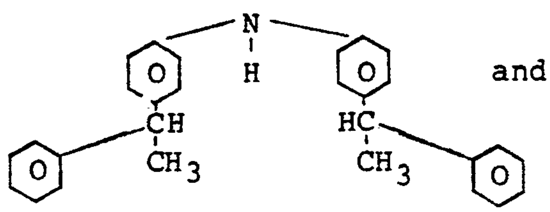 and 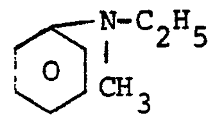 .

Amine containing silicon compounds which may be used according to this invention are aminofunctional silanes and siloxanes. Examples of aminofunctional silanes which may be employed are beta-aminopropyltriethoxysilane, gamma-aminopropyl-dimethoxysilane, methyl-beta-(aminoethyl)-gamma-aminopropyl dimethoxysilane, omega-aminohexyltributoxysilane, beta-(aminoethyl) propyltrimethoxysilane, beta-(aminoethyl)-hexyltriethoxysilane, beta-(aminopropyl)butyltributoxysilane, (trimethylsilylpropyl)-ethylenediamine and (trimethylsilylisobutyl)-ethylenediamine.

The aminofunctional siloxanes to be used according to this invention are well known in the art. They may be prepared in accordance with the process described in U.S. Patent No. 2,947,771 to Bailey, in which an aminofunctional silane is equilibrated with a siloxane in the presence of an alkali-metal hydroxide. Also, they may be prepared in accordance with the process described in U.S. Patent No. 3,598,853 to Friedman et al, in which an aminofunctional silane is condensed with a silanol terminated polydiorganosiloxane. Other methods for preparing aminofunctional siloxane fluids are described in U.S. Patents Nos. 3,890,269 to Martin; 2,930,809 to Jex et al and 3,045,036 to Jex et al.

Representative examples of aminofunctional siloxanes are

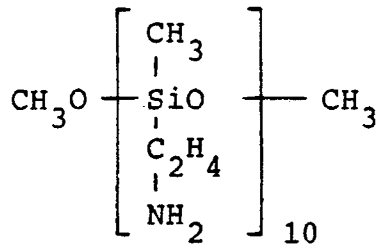

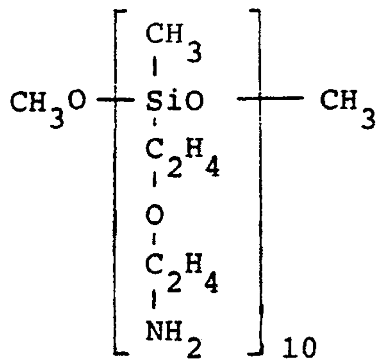

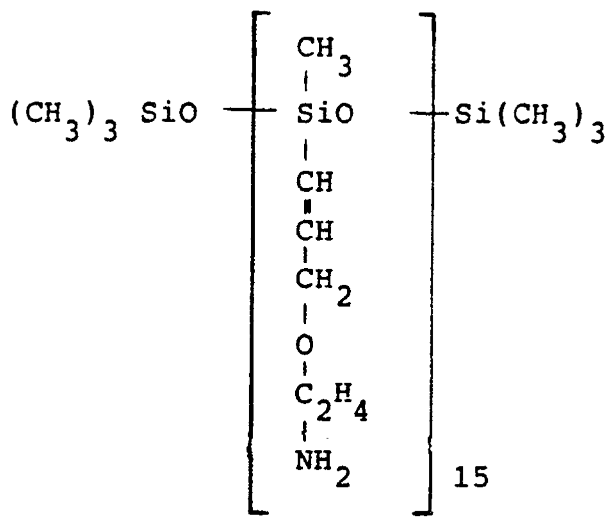

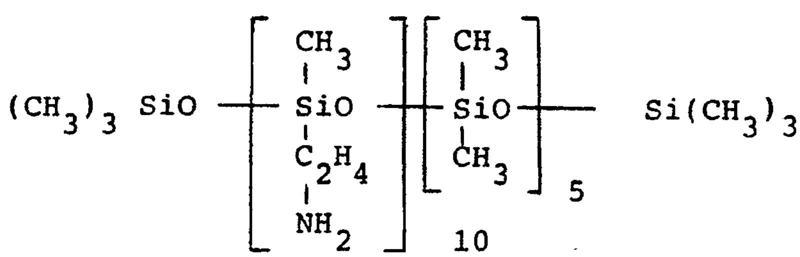

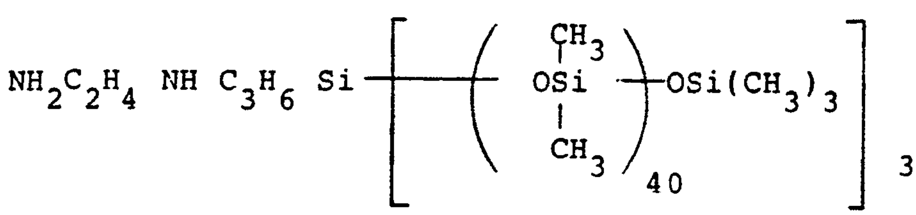

The aminofunctional organopolysiloxane copolymers may be prepared in accordance with the procedure described in U.S. Patent No. 3,544,498 to Holdstock et al, in which a mixture containing the silanol chain-terminated polyorganosiloxane and an aminoalkoxyalkylsilane or aminoalkoxyalkenylsilane and if desired, an aminoalkylsilane are partially hydrolyzed and condensed by adding the necessary amount of water to provide the degree of hydrolysis and condensation desired. Generally, the amount of hydrolysis and condensation desired is that amount which will result in a copolymer having the desired viscosity and the desired alkoxy content. After the partial hydrolysis and condensation, the reaction mixture consists of the organopolysiloxane copolymer, free alcohol corresponding to the alkoxy group which is hydrolyzed from the silane by the water addition and water resulting from the condensation of the silanol groups. The water and alcohol are stripped from the reaction mixture at reduced pressure and at a temperature ranging from room temperature up to about 60°C and more preferably at a temperature up to about 40°C.

The amount of aminofunctional compound which may be added to the polysiloxane fluid consisting of a thiofunctional polysiloxane fluid and/or an organopolysiloxane fluid to prevent degradation in the presence of acid clays may range e.g. from 0.001 up to 10 percent by weight, preferably from 0.005 to 5 percent by weight and more preferably from 0.1 to 1 percent by weight based on the weight of the polysiloxane fluid(s) and the aminofunctional compound.

It is preferred that the aminofunctional compound be added to the polysiloxane fluid(s) at a temperature of from 20°C to 40°C and then heated up to a temperature of 80°C and more preferably from 60°C to 80°C. However, it has been found that the polysiloxane fluid(s) consisting of thiofunctional polysiloxane and/or organopolysiloxane fluids may be stabilized in the absence of heat by merely mixing the amine with the polysiloxane fluid(s) at temperatures as low as 20°C.

The polysiloxane fluid(s) stabilized according to this invention are stable at elevated temperatures in the presence of acid clays. These polysiloxane fluid(s) may be used as fuser agents in an electrostatic copying apparatus where they contact clay impregnated paper without gelling even at elevated temperatures.

Specific embodiments of this invention are further illustrated in the following examples in which all parts are by weight unless otherwise specified.

Preparation Of Thiofunctional Polysiloxane Fluids

The thiofunctional polysiloxane fluids used in the following examples are prepared in the following manner:

(A) A thiofunctional polysiloxane fluid is prepared by adding 167 parts of 3-mercaptopropyltrimethoxysilane, 140 parts of water, 250 parts of toluene, 100 parts of hexamethyldisiloxane and 60 parts of Filtrol No. 13 acid clay (available from Filtrol Corporation) to a reaction vessel containing 2770 parts of hexamethylcyclotrisiloxane heated to 70°C. The vessel is then heated to 100°C and maintained at this temperature for three hours. The contents of the vessel are then cooled to 60°C and filtered. The volatiles are stripped off for about 3 hours at about 190°C at less than 133 Pa. A clear, transparent liquid is obtained having a viscosity of about 115 mPa.s at 25°C. Nuclear Magnetic Resonance (NMR) analysis shows that the product has a mol ratio of $HSC_3H_6:Si(CH_3)_2$ of 1:42. The SH content of the product is about 0.72 percent.

(B) A thiofunctional polysiloxane fluid is prepared by adding 80 parts of 3-mercaptopropyltrimethoxysilane to a reaction vessel containing 1184 parts of a hydroxyl terminated dimethylpolysiloxane having a viscosity of about 350 mPa.s at 25°C and containing 2.43 percent by weight of hydroxyl groups. The reactants are heated to 200°C for one hour and then vacuum stripped for two hours at 200°C at less than 133 Pa. A clear product having a viscosity of about 72.1 mPa.s at 25°C is obtained which by Nuclear Magnetic Resonance has a ratio of $CH_3O:HSC_3H_6:Si(CH_3)_2$ of 1.58:1.0:32.4. The percent of SH is about 0.79 percent.

Example 1

About 99.95 parts of a trimethylsiloxy-endblocked dimethylpolysiloxane having a viscosity of 350 mPa.s at 25°C are mixed with 0.05 parts of 4,4'-bis-(alpha-methylbenzyl)diphenylamine of the formula

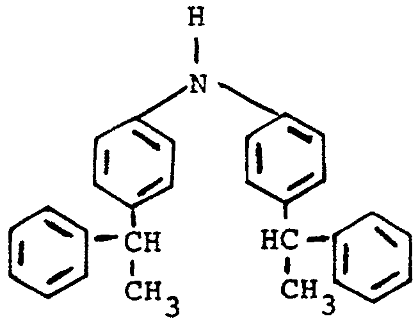

at a temperature of from 20° to 30°C. About five parts of the mixture are placed in two aluminum evaporating dishes. To one dish is added 0.1 part of kaolin clay (available from R.T. Vanderbilt Co.), and then both dishes are placed in a 200°C forced air oven for 24 hours. The percent of weight loss is determined. The results are illustrated in Table I.

Example 2

The procedure of Example 1 is repeated, except that 99.5 parts of a trimethylsiloxy-endblocked dimethylpolysiloxane fluid having a viscosity of 350 mPa.s at 25°C and 0.5 parts of the amine are used. The results are shown in Table I.

Comparison Example $V_1$

The procedure of Example 1 is repeated, except that the amine is omitted. The results are shown in Table I.

TABLE I

| Example No. | Siloxane Fluid (Parts) | Amine Compound | Amine Compound (Parts) | Weight Loss (Percent) Without Kaolin Clay | Weight Loss (Percent) With Kaolin Clay |
|---|---|---|---|---|---|
| 1 | 99.95 | BDPA | .05 | 0.15 | 1.18 |
| 2 | 99.5 | BDPA | .5 | 0.32 | 0.45 |
| Comparison Example | | | | | |
| $V_1$ | 100 | ---- | --- | 0.17 | 57.3 |

BDPA = 4,4'-bis(alpha-methylbenzyl)diphenylamine

Example 2 to 9

The procedure of Example 1 is repeated in the following examples, except that other amines are substituted for the 4,4'-bis-(alpha-methylbenzyl)diphenylamine of Example 1. The results are shown in Table II.

TABLE II

| Example No. | Siloxane Fluid* (Parts) | Amine Compound | Amine Compound (Parts) | Weight Loss (Percent) Without Kaolin Clay | Weight Loss (Percent) With Kaolin Clay |
|---|---|---|---|---|---|
| 3 | 99.9 | diphenylamine | 0.1 | 0.27 | 0.128 |
| 4 | 99.0 | diphenylamine | 1.0 | 1.17 | 1.23 |
| 5 | 99.9 | 2-aminopropyl-triethoxysilane | 0.1 | .86 | 1.2 |
| 6 | 99.0 | 2-aminoethyl-3-propyltrimethoxy-silane | 1.0 | .97 | 1.17 |
| 7 | 99.0 | dimethylocta-decylamine | 1.0 | 1.13 | 1.12 |
| 8 | 99.9 | N-methylocta-decylamine | 0.1 | .24 | 1.07 |
| 9 | 99.0 | octadecylamine | 1.0 | 0.92 | 0.99 |
| Comparison Example | | | | | |
| $V_1$ | 100 | -------------- | --- | 0.17 | 57.3 |

*trimethylsiloxy-endblocked polydimethylsiloxane (viscosity - 350 mPa.s at 25°C).

Example 10

The procedure of Example 1 is repeated, except that 4 parts of beta-aminopropyltrimethylsilane is added to 99 parts of a trimethylsiloxy-endblocked polydimethylsiloxane and heated to 40°C. The resultant product exhibits improved stability in the presence of kaolin clay at an elevated temperature.

Example 11

The procedure of Example 10 is repeated, except that 3 parts of (trimethylsilylpropyl)ethylenediamine is substituted for the beta-aminopropyltrimethylsilane. The resultant composition exhibits improved stability in the presence of kaolin clay.

Example 12

The procedure of Example 1 is repeated, except that 3.5 parts of an aminofunctional polysiloxane having the formula

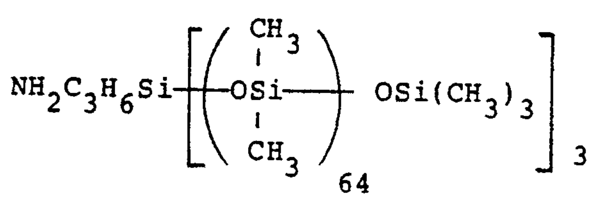

is substituted for the 4,4'-bis-(alpha-methylbenzyl)diphenylamine. The results are shown in Table III.

TABLE III

| Example No. | Siloxane Fluid (Parts) | Amine Compound | Amine Compound (Parts) | Weight Loss (Percent) Without Kaolin Clay | With Kaolin Clay |
|---|---|---|---|---|---|
| 12 | 96.5 | AF | 3.5 | 0.44 | 9.55 |
| Comparison Example | | | | | |
| $V_1$ | 100 | -- | --- | 0.17 | 57.3 |

AF = Aminofunctional fluid.

Example 13

The procedure of Example 1 is repeated, except that a thiofunctional polysiloxane fluid prepared in accordance with (A) above and having a viscosity of about 115 mPa.s at 25° C is mixed with varying amounts of 4,4'-bis-(alpha-methylbenzyl)diphenylamine at a temperature of from 20 to 30° C. The results are illustrated in Table IV.

TABLE IV

| Example No. | Thiofunctional Polysiloxane Fluid (Parts) | Amine (Parts) | Weight Loss (Percent) Without Kaolin Clay | With Kaolin Clay |
|---|---|---|---|---|
| 13(a) | 99.99 | .01 | 0.89 | 5.53 |
| 13(b) | 99.975 | .025 | 1.19 | 4.04 |
| 13(c) | 98.00 | 2.0 | 7.59 | 7.51 |
| 13(d) | 100.0 | ----- | 1.17 | 8.64 |

Example 14

The procedure of Example 13 is repeated, except that the thiofunctional polysiloxane fluid prepared in accordance with (B) above is substituted for the thiofunctional polysiloxane fluid prepared in (A) above. The percent of volatiles obtained in the presence of kaolin clay is substantially reduced.

Example 15

The procedure of Example 13 is repeated, except that 0.5 parts of an aminofunctional polysiloxane fluid, whose preparation is described below, are substituted for the 4,4'-bis-(alpha-methylbenzyl)diphenylamine. The volatiles developed as the result of heating the thiofunctional polysiloxane fluid in the presence of kaolin clay are substantially reduced.

The aminofunctional polysiloxane fluid used in this example is prepared by heating a mixture containing about 265 parts of octamethylcyclotetrasiloxane, 2.2 parts of beta-(aminoethyl)-gamma-aminopropyltrimethoxysilane and 0.03 parts of potassium hydroxide to a temperature of 145° C for three hours. After cooling the liquid product to room temperature, 0.03 ports of acetic acid are added to neutralize the catalyst. The product is filtered and a liquid product having a viscosity of about 40 mpa.s at 25° C is recovered. Nuclear Magnetic Resonance (NMR) analysis indicates that the ratio of beta-(aminoethyl)-gamma-aminopropyl to $OCH_3$ to $(CH_3)_2SiO$ groups is about 1:3:36.

Example 16

The procedure of Example 1 is repeated, except that varying amounts of 4,4'-bis-(alpha-methylbenzyl)-diphenylamine are mixed with a blend of siloxane fluids consisting of 10 parts by weight of the thiofunctional polysiloxane fluid prepared in (A) above and 90 parts by weight of a trimethylsiloxy-endblocked dimethylpolysiloxane fluid having a viscosity of about 300 mPa.s at 25° C at a temperature of about 25° C. The results are shown in Table V.

Comparison Example $V_2$

The procedure of Example 16 is repeated, except that the 4,4'-bis-(alpha-methylbenzyl)diphenylamine is omitted. The result is shown in Table V.

TABLE V

| Example No. | Siloxane Blend (Parts) | Amine Compound | Amine Compound (Parts) | Weight Loss (Percent) Without Kaolin Clay | Weight Loss (Percent) With Kaolin Clay |
|---|---|---|---|---|---|
| (a) | 99.99 | MBD | 0.01 | 0.34 | 10.00 |
| (b) | 99.975 | MBD | 0.025 | 0.40 | 3.4 |
| (c) | 98 | MBD | 2.0 | 2.8 | 3.0 |
| Comparison Example | | | | | |
| $V_2$ | 100 | --- | ---- | 0.33 | 21.86 |

MBD = 4,4'-bis-(alpha-methylbenzyl)diphenylamine

Example 17

The procedure of Example 16 is repeated, except that one part of kaolin clay is substituted for 0.1 part of kaolin clay. The results are shown in Table VI.

Comparison Example $V_3$

The procedure of Example 17 is repeated, except that the 4,4'-bis(alpha-methylbenzyl)diphenylamine is omitted. The results are shown in Table VI.

TABLE VI

| Example No. | Siloxane Blend (Parts) | Amine Compound | Amine Compound (Parts) | Weight Loss (Percent) Without Kaolin Clay | Weight Loss (Percent) With Kaolin Clay |
|---|---|---|---|---|---|
| 17(a) | 99.95 | MBD | .05 | 0.53 | 57.8 |
| (b) | 98 | MBD | 2.0 | 2.26 | 3.52 |
| Comparison Example | | | | | |
| $V_3$ | 100 | --- | --- | 0.03 | 82.4 |

MBD = 4,4'-bis-(alpha-methylbenzyl)diphenylamine

Example 18

The procedure of Example 16 is repeated, except that 10 parts of a diaminosiloxane fluid of the formula

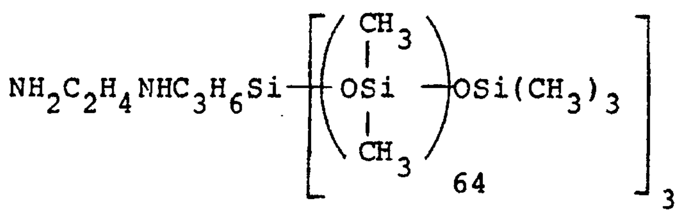

are mixed with 90 parts of a siloxane blend consisting of 10 parts of the thiofunctional polysiloxane fluid prepared in accordance with (A) above and 90 parts of a trimethylsiloxy-endblocked dimethylpolysiloxane fluid. The result is shown in Table VII.

TABLE VII

| Example No. | Siloxane Blend (Parts) | Amine Compound | Amine Compound (Parts) | Weight Loss (Percent) Without Kaolin Clay | Weight Loss (Percent) With Kaolin Clay |
|---|---|---|---|---|---|
| 18 | 90 | 3DP | 10 | 5.64 | 5.63 |
| Comparison Example | | | | | |
| $V_4$ | 100 | --- | -- | 0.33 | 21.86 |

3DP - diaminosiloxane fluid

Example 19

The procedure of Example 16 is repeated, except that 10 parts of the thiofunctional polysiloxane fluid prepared in (B) above are substituted for the thiofunctional polysiloxane fluid prepared in (A) above. The volatiles developed as a result of heating the thiofunctional polysiloxane fluid in the presence of kaolin clay are substantially reduced.

Example 20

The procedure of Example 16 is repeated, except that 0.5 parts of an aminofunctional polysiloxane fluid prepared in Example 15 above are substituted for the 4,4'-bis-(alpha-methylbenzyl)diphenylamine. The volatiles developed as a result of heating the thiofunctional polysiloxane fluid in the presence of kaolin clay are substantially reduced.

Example 21

The procedure of Example 16 is repeated, except that 2-aminoethyl-3-aminopropyltrimethoxysilane is substituted for the 4,4'-bis-(alpha-methylbenzyl)diphenylamine. The results are shown in Table VIII.

TABLE VIII

| Example No. | Siloxane Blends (Parts) | Amine Compound | Amine Compound (Parts) | Weight Loss (Percent) Without Kaolin Clay | Weight Loss (Percent) With Kaolin Clay |
|---|---|---|---|---|---|
| 21(a) | 99.95 | AEAPMS | 0.05 | 0.68 | 2.18 |
| (b) | 99.9 | AEAPMS | 0.1 | 0.97 | 1.54 |
| (c) | 99.0 | AEAPMS | 1.0 | 1.57 | 1.72 |
| Comparision Example | | | | | |
| $V_2$ | 100 | ------ | --- | 0.34 | 21.82 |

AEAPMS = 2-aminoethyl-3-aminopropyltrimethoxysilane

## Claims

1. Use of an aminofunctional compound for stabilizing a polysiloxane fluid containing a thiofunctional polysiloxane fluid and/or an organopolysiloxane fluid against depolymerisation under the influence of substances which promote such depolymerisation, where the aminofunctional compound is used in an amount of at least 0.001 percent by weight of the aminofunctional compound and the polysiloxane fluid.

2. The use of claim 1, wherein the aminofunctional compound is used in an amount of from 0.001 to 10 percent by weight of the aminofunctional compound and the polysiloxane fluid.

3. The use of claim 1 or 2, wherein the aminofunctional compound is an organofunctional amine, an aminofunctional silane, or an aminofunctional siloxane.

4. The use of claim 3, wherein the aminofunctional compound has the formula

$$R^1-\overset{\overset{R^1}{|}}{N}-(R^2-\overset{\overset{R^1}{|}}{N})_m-R^1 \quad ,$$

$$\left[ R^1-\overset{\displaystyle R^1}{\overset{|}{N}}-R^2-(\overset{\displaystyle R^1}{\overset{|}{N}}-R^2)_m- \right]_y -SiR_{4-y}$$

, or

$$\left[ R^1-\overset{\displaystyle R^1}{\overset{|}{N}}-R^2-(\overset{\displaystyle R^1}{\overset{|}{N}}-R^2)_m- \right]_y -\overset{\displaystyle R_a}{\overset{|}{Si}}O_{(4-a-y)/2}$$

where

- **R** is selected from the group consisting of a monovalent hydrocarbon radical having from 1 to 18 carbon atoms and a halogenated monovalent hydrocarbon radical having from 1 to 18 carbon atoms,
- **$R^1$** is selected from the group consisting of hydrogen and monovalent hydrocarbon radicals having from 1 to 30 carbon atoms which may be substituted with hydroxyl groups,
- **$R^2$** is a divalent hydrocarbon radical having from 1 to 20 carbon atoms,
- **a** is a number from 0 to 2,
- **m** is an integer of from 0 to 20, and
- **y** is a number of from 1 to 4.

**5.** The use of claim 4, wherein at least one **$R^1$** is a monovalent hydrocarbon radical having from 1 to 30 carbon atoms substituted with a hydroxyl group.

## Revendications

**1.** Application d'un composé aminofonctionnel pour stabiliser un polysiloxane fluide renfermant un polysiloxane thiofonctionnel fluide et/ou un polyorganosiloxane fluide, contre la dépolymérisation sous l'influence de substances qui stimulent une telle décomposition, application selon laquelle le composé aminofonctionnel est utilisé en une quantité d'au moins 0,001 % en poids par rapport au composé aminofonctionnel et au polysiloxane fluide.

**2.** Application selon la revendication 1 dans laquelle le composé aminofonctionnel est utilisé en une quantité de 0,001 à 10 % en poids par rapport au composé aminofonctionnel et au polysiloxane fluide.

**3.** Application selon l'une des revendications 1 et 2, caractérisée en ce que le composé aminofonctionnel est une amine organofonctionnelle, un silane aminofonctionnel ou un siloxane aminofonctionnel.

**4.** Application selon la revendication 3 selon laquelle le composé aminofonctionnel est un composé répondant à une des formules

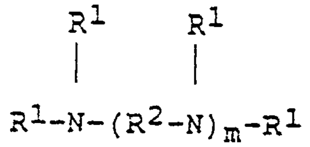

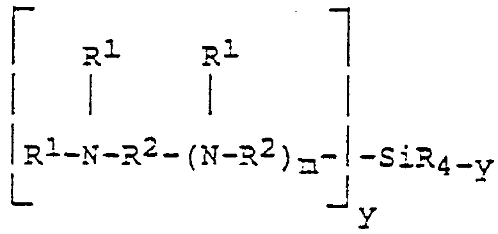

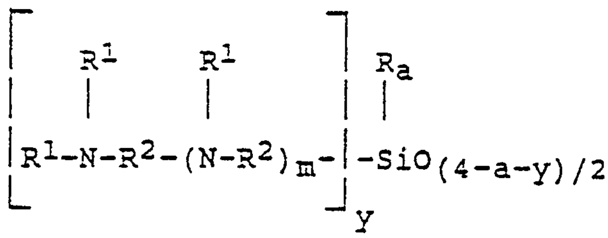

dans lesquelles

- R représente un radical pris dans l'ensemble constitué par les radicaux hydrocarbonés univalents qui contiennent de 1 à 18 atomes de carbone et les radicaux hydrocarbonés univalents halogénés qui contiennent de 1 à 18 atomes de carbone,
- $R^1$ représente un radical pris dans l'ensemble constitué par l'hydrogène et les radicaux hydrocarbonés univalents qui contiennent de 1 à 30 atomes de carbone et qui peuvent porter des radicaux hydroxy,
- $R^2$ représente un radical hydrocarboné divalent qui contient de 1 à 20 atomes de carbone,
- a désigne un nombre de 0 à 2,
- m désigne un entier de 0 à 20, et
- y désigne un nombre de 1 à 4.

**5.** Application selon la revendication 4 selon laquelle au moins un des $R^1$ représente un radical hydrocarboné univalent qui contient de 1 à 30 atomes de carbone et qui porte un radical hydroxy.

## Patentansprüche

**1.** Verwendung einer aminofunktionellen Verbindung zum Stabilisieren einer Polysiloxanflüssigkeit, enthaltend eine thiofunktionellen Polysiloxanflüssigkeit und/oder eine Organopolysiloxanflüssigkeit, gegen eine Depolymerisation unter dem Einfluß von Substanzen, die solch eine Depolymerisation fördern, wobei die aminofunktionelle Verbindung in einer Menge von wenigstens 0,001 Gew.-%, bezogen auf die aminofunktionelle Verbindung und die Polysiloxanflüssigkeit verwendet wird.

**2.** Verwendung nach Anspruch 1, wobei die aminofunktionelle Verbindung in einer Menge von 0,001 bis 10 Gew.-%, bezogen auf die aminofunktionelle Verbindung und die Polysiloxanflüssigkeit verwendet wird.

**3.** Verwendung nach Anspruch 1 oder 2, wobei die aminofunktionelle Verbindung ein organofunktionelles Amin, ein aminofunktionelles Silan oder ein aminofunktionelles Siloxan ist.

**4.** Verwendung nach Anspruch 3, wobei die aminofunktionelle Verbindung die Formel

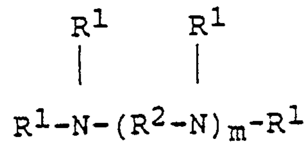

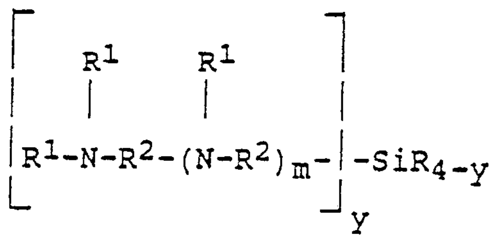

oder

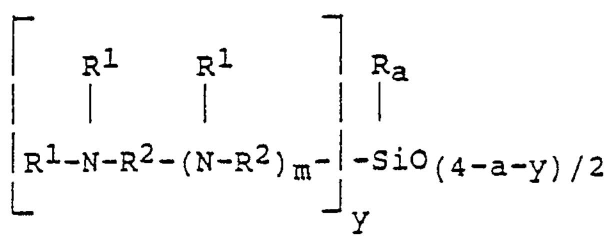

besitzt, worin

- R ausgewählt ist aus der Gruppe bestehend aus einwertigen Kohlenwasserstoffgruppen mit 1 bis 18 Kohlenstoffatomen und halogenierten einwertigen Kohlenwasserstoffgruppen mit 1 bis 18 Kohlenstoffatomen.
- $R^1$ ausgewählt ist aus der Gruppe bestehend aus Wasserstoff und einwertigen Kohlenwasserstoffgruppen mit 1 bis 30 Kohlenstoffatomen, die durch Hydroxylgruppen substituiert sein können, und
- $R^2$ eine zweiwertige Kohlenwasserstoffgruppe mit 1 bis 20 Kohlenstoffatomen bedeutet.
- a eine Zahl von 0 bis 2,
- m eine ganze Zahl von 0 bis 20 und
- y eine Zahl von 1 bis 4

bedeuten.

**5.** Verwendung nach Anspruch 4, wobei wenigstens ein $R^1$ eine mit einer Hydroxylgruppe substituierte Kohlenwasserstoffgruppe mit 1 bis 30 Kohlenstoffatomen ist.